# EUROPÄISCHE PATENTSCHRIFT

(11) **EP 0 758 789 B1**
(45) Veröffentlichungstag und Bekanntmachung des Hinweises auf die Patenterteilung: **25.06.2003**
(21) Anmeldenummer: 96250167.2
(22) Anmeldetag: 06.08.1996
(51) Int. Cl.: H01H 9/02

(54) **Hängeschalter, insbesondere für Krane mit Schützensteuerung**
Suspended switch, particularly for cranes
Interrupteur suspendu, en particulier pour grues

(30) Priorität: 16.08.1995 DE 19531925
(43) Veröffentlichungstag der Anmeldung: 19.02.1997
(73) Patentinhaber: Demag Cranes & Components GmbH, 58300 Wetter (DE)
(72) Erfinder: Krebs, Wolfgang, 58300 Wetter (DE); Somborn, Günter, 58089 Hagen (DE); Oemus, Klaus-Dieter, 58675 Hemer (DE); Münzebrock, Anton, 44139 Dortmund (DE); Grieb, Eckerhardt, 58093 Hagen (DE); Lichtenvort, Uwe, 45239 Essen (DE)
(74) Vertreter: Moser, Jörg Michael, Dipl.-Ing.

(56) Entgegenhaltungen:
- EP-A- 0 374 962
- EP-A- 0 432 286
- EP-A- 0 592 795
- DE-U- 9 003 427
- US-A- 5 424 499

## Beschreibung

Die Erfindung betrifft einen Hängeschalter, insbesondere für Krane mit Schützensteuerung gemäß den Merkmalen des Oberbegriffes des Patentanspruches 1.

Ein derartiger Hängeschalter ist bekannt (DE-AS 27 56 103 oder EP-A-0 374 962). Im Prinzip hat sich dieser Hängeschalter bewährt. An solche Geräte werden jedoch immer weitergehende Forderungen bezüglich Herstellungskosten, Optimierung der ergonomischen Eigenschaften, Montageeigenschaften u.dgl. gestellt. Hierbei bestimmt die äußere Form die Anordnung und Gestaltung der im Innenraum vorgesehenen Bauteile. Es ist bisher nicht möglich gewesen, wirtschaftlich herstellbare Schaltungen mit digitalarbeitenden Bauteilen im Innenraum eines solchen Gerätes unterzubringen. Außerdem wird die Unterbringung solcher moderner Schaltungen dann problematisch, wenn eine von der geraden Erstreckung abweichende Bauform des Schaltergehäuses gewählt werden soll.

Demzufolge liegt der Erfindung die Aufgabe zugrunde, einen Hängeschalter zu schaffen, der bei einer von der geraden Form abweichenden Form alle notwendigen Forderungen erfüllt, die sich auf Herstellungskosten, Optimierung der ergonomischen Eigenschaften, Montageaufwand u.dgl. beziehen.

Die gestellte Aufgabe wird erfindungsgemäß dadurch gelöst, daß das Gesamtgehäuse zur Bedienungsperson hin gebogen ausgeführt ist, daß im Gehäuseoberteil eine der Bogenform des Gesamtgehäuses sich anpassende, gebogene Leiterkarte angeordnet ist und daß an deren Vorderseite die Betätigungselemente für an deren Rückseite befestigte Betätigungs- und/oder Anzeigegeräte angeordnet sind. Hierfür können federnd nachgiebige Leiterkarten eingesetzt werden, die bei ihrer Herstellung und Bestückung flach liegen, sich jedoch beim Einbau der ergonomisch günstigeren Bogenform des Gesamtgehäuses anpassen lassen. Die Sicht auf die Betätigungselemente wird durch die Bogenform verbessert. Es ergibt sich eine ermüdungsfreie und übersichtliche Handhabung. Die Bogenform der Leiterplatte ergibt sich bei Montage, so daß der Einbau der kompletten Leiterplatte erfolgen kann.

Die Bestückung der Leiterplatte ist dabei so gestaltet, daß an der Rückseite der gebogenen Leiterkarte Stecksockel für die Betätigungs- und/oder Anzeigegeräte befestigt sind. Der Bogen stört dabei Befehls- und Anzeigegeräte nicht, weil diese auf der Bogenaußenseite liegen.

Eine Montage-Erleichterung wird auch dadurch erzielt, daß die Befestigungsmittel für die Stecksockel aus Federklemmen gebildet sind, die jeweils in Ausnehmungen des Stecksockels verrastet und in Steckrichtung relativ zum Stecksockel in bestimmten Grenzen frei beweglich sind, durch die Leiterkarte hindurchverlaufen.

Die Kontaktierung wird dabei derart gestaltet, daß in ein freies Ende der Federklemmen Steckfahnen des Schaltelementkontaktes einführbar sind.

Die Betätigungs- und/oder Anzeigegeräte sind mittels der Steckfahnen von der Hinterseite hier in die Stecksockel einsetzbar und verrastbar.

Die Bogenform des Gesamtgehäuses wird dabei dadurch berücksichtigt, daß die Stecksockel quer zur Längsrichtung der Gehäuseober- bzw. -unterteile mittig verlaufende Filmscharniere bilden, die entsprechend der Wölbung der Leiterkarte biegbar sind.

Das Gewicht des Hängeschalters braucht sich nicht negativ auf die elektrischen Zuleitungen auszuwirken. Um einen solchen negativen Einfluß auszuschalten, wird nach weiteren Merkmalen vorgeschlagen, daß eine Zugentlastung mittels eines an der Steuerleitung auf der zur Bedienperson zugewandten Seite anliegenden Seils vorgesehen ist.

Eine ergonomische Verbesserung besteht ferner darin, daß am Gehäuseunterteil zumindest eine Griffleiste in Längsrichtung zum Halten des Gesamtgehäuses vorgesehen ist.

Die Einsichtnahme auf die Betätigungselemente wird ferner dahingehend beeinflußt, daß die Bogenkrümmung des Gesamtgehäuses in Abhängigkeit der Anzahl der Betätigungselemente bzw. der Betätigungs- und/oder Anzeigegeräte in der Art gewählt ist, daß bei wachsender Anzahl der Betätigungselemente bzw. der Betätigungsund/oder der Anzeigegeräte eine kleinere Krümmung verwendet wird.

Der mit einer Hand zu haltende Hängeschalter kann unter dem Gesichtswinkel der Bedienungsperson besonders günstig in allen Bogenbereichen eingesehen werden, so daß vorteilhaft ist, daß oberhalb der Reihen von Betätigungselementen eine Multifunktionsanzeige angeordnet ist.

Dazu wird vorgeschlagen, daß die Multifunktionsanzeige jeweils aus einem Display besteht.

Diese Anordnung kann noch dahingehend vorteilhaft ausgestaltet werden, daß jeweils unterhalb eines Paares von Betätigungselementen und/oder unterhalb des Displays eine Schrägfläche für eine Beschriftung vorgesehen ist.

Trotz der bogenförmigen Anordnung ist es weiterhin möglich, daß die Betätigungs- und die Anzeigegeräte sowie die Multifunktionsanzeige auf der Leiterkarte verdrahtet sind.

Von Vorteil ist außerdem daß die durch das Gehäuseunterteil und das Gehäuseoberteil eingeführte Steuerleitung zentral an einer Steckleiste der Leiterkarte angeschlossen ist.

Ein Ausführungsbeispiel der Erfindung ist in der Zeichnung dargestellt und wird im folgenden näher beschrieben. Es zeigen
- Fig. 1: den Hängeschalter von der Seite gesehen, teilweise geschnitten,
- Fig. 2: eine Vorderansicht des Hängeschalters und
- Fig. 3: einen Teilschnitt aus dem Inneren des Hängeschalters gemäß der Schnittangabe A - B in Fig. 2.

Der Hängeschalter ist insbesondere für Krane mit Schützensteuerung vorgesehen, wobei aus einem Gehäuseunterteil 1 und einem Gehäuseoberteil 2, die das Gesamtgehäuse 1, 2 bilden, an einem Seil 3 eine Steuerleitung 4 von einer Steckleiste 5 aus herausgeführt ist und zu dem zu steuernden Objekt verläuft. Das Gehäuseunterteil 1 und das Gehäuseoberteil 2 nehmen Befehls- und/oder Anzeigegeräte 6 auf. Eine besondere ergonomische Eigenschaft ergibt sich daraus, daß die Gehäuse-Außenform des Gesamtgehäuses 1, 2 in nach unten fortschreitenden Schritten zur Bedienungsperson hin angenähert ist, wodurch die Griffigkeit des Hängeschalters und gleichzeitig die Einsehbarkeit verbessert werden.

Die ergonomischen Eigenschaften und die Verbindung mit modernen digitalen Schaltungen wird nunmehr dadurch gesteigert, daß das Gesamtgehäuse 1, zur Bedienungsperson hin gebogen ausgeführt ist, daß im Gehäuseoberteil 2 eine der Bogenform des Gesamtgehäuses 1, 2 sich anpassende, gebogene Leiterkarte 10 angeordnet ist und daß an deren Vorderseite 10a die Betätigungselemente 8 für an deren Rückseite 10b befestigte Befehls- und/oder Anzeigegeräte 6 angeordnet sind.

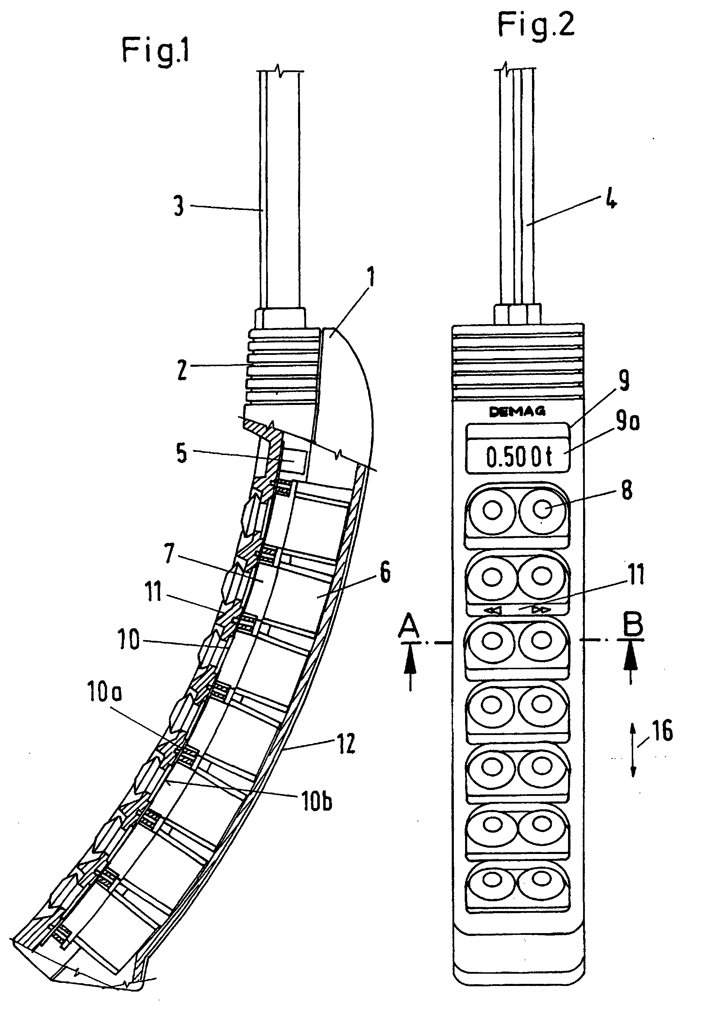

An der Rückseite 10b der gebogenen Leiterkarte 10 sind Stecksockel 7 für die Befehls- und/oder Anzeigegeräte 6 befestigt (Fig. 1).

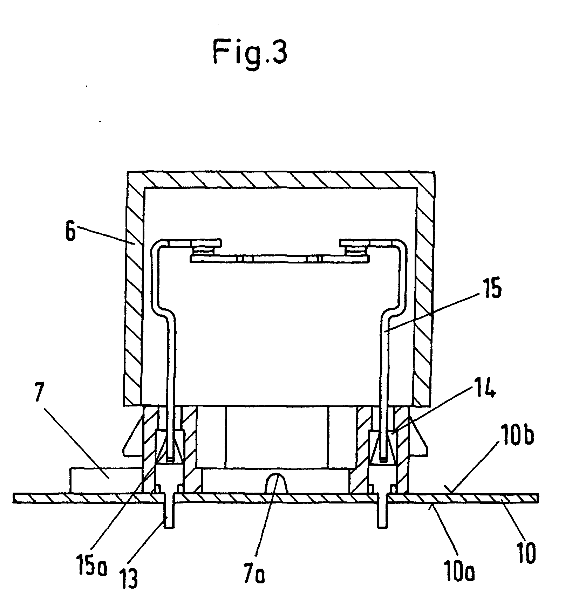

Gemäß Fig. 3 sind die Befestigungsmittel für die Stecksockel 7 aus Federklemmen 13 gebildet, die jeweils in Ausnehmungen 14 des Stecksockels 7 verrastet und in Steckrichtung relativ zum Stecksockel 7 in bestimmten Grenzen (einige Zehntelsmillimeter) freibeweglich sind, durch die Leiterkarte hindurch verlaufen und auf der Vorderseite 10a verlötet sind.

In ein freies Ende der Federklemmen 13 sind Steckfahnen 15a des Schaltelementkontaktes 15 einführbar. Die Montage erfolgt derart, daß die Betätigungs- und/oder Anzeigegeräte 6 mittels der Steckfahnen 15a von der Hinterseite her in die Stecksockel 7 eingesetzt und verrastet werden. Die Bogenform kann trotz "gerader Bauteile" eingenommen werden, indem die Stecksockel 7 quer zur Längsrichtung 16 der Gehäuseober- bzw. -unterteile 1, 2 mittig verlaufende Filmschamiere 7a bilden, die entsprechend der Wölbung bzw. Krümmung der Leiterkarte 10 biegbar sind.

Die bei der Bedienung auftretenden Handkräfte und die Belastung durch das Gewicht des Hängeschalters werden dadurch aufgefangen, daß eine Zugentlastung mittels des an der Steuerleitung 4 auf der zur Bedienungsperson zugewandten Seite anliegenden Seils 3 vorgesehen ist.

Die Anzahl der Betätigungselemente 8 ist nicht auf die Anzahl der dargestellten Betätigungselemente 8 beschränkt. Vielmehr ist die Bogenkrümmung des Gesamtgehäuses 1, 2 in Abhängigkeit der Anzahl de Betätigungselemente 8 bzw. der Betätigungs- und/oder Anzeigegeräte 6 (auch nach deren Abmessungen) in der Art gewählt, daß bei wachsender Anzahl der Betätigungselemente 8 bzw. der Betätigungsund/oder Anzeigegeräte 6 eine kleinere Krümmung des Bogens verwendet wird.

Oberhalb der Reihen von Betätigungselementen 8 ist eine Multifunktionsanzeige 9 angeordnet, die jeweils aus einem Display 9a bestehen kann.

Unterhalb eines Paares von Betätigungselementen 8 und/oder unterhalb des Displays 9a ist eine Schrägfläche 11 für eine Angabe der jeweiligen Funktion vorgesehen.

Die Betätigungs- und die Anzeigegeräte 6 sowie die Multifunktionsanzeige 9 sind auf der Leiterkarte 10 verdrahtet. Die durch das Gehäuseunterteil 1 und das Gehäuseoberteil 2 eingeführte Steuerleitung 4 ist zentral an der Steckleiste 5 der Leiterkarte 10 angeschlossen. Die Bedienbarkeit wird auch dadurch gesteigert, daß am Gehäuseunterteil 1 zumindest eine Griffleiste 12 in Längsrichtung 16 zum Halten des Gesamtgehäuses 1, 2 vorgesehen ist.

## Patentansprüche

1. Hängeschalter, insbesondere für Krane mit Schützensteuerung, der über eine Steuerleitung (4) mit einer elektrischen bzw. elektronischen Steuerung verbunden ist, mit zwei verbindbaren Gehäuseteilen (1,2), die Betätigungselemente (8) und Befehlsund/oder Anzeigegeräte (6) aufnehmen, wobei die Gehäuse-Außenform nach unten fortschreitend zur Bedienungsperson hin angenähert ist und wobei an deren Vorderseite (10a) die Betätigungselemente (8) für die auf einer Leiterkarte (10) angeordneten Befehls- und/oder Anzeigegeräte (6) vorgesehen sind,
**dadurch gekennzeichnet,**
**dass** im Gehäuseoberteil (2) des zur Bedienungsperson hin kontinuierlich gebogenen Gesamtgehäuses (1 und (2) die der Bogenform des Gesamtgehäuses (1 und 2) sich anpassende und so entsprechend bogenförmig gebogene Leiterkarte (10) angeordnet ist,
**dass** an deren Rückseite (10b) die Befehls- und/oder Anzeigegeräte (6) angeordnet sind, wofür an der Rückseite (10b) der gebogenen Leiterkarte (10) Stecksockel (7) vorgesehen sind, in welche die Befehls- und/oder Anzeigegeräte (6) von der Hinterseite her einsetzbar sind,
**dass** die Befestigungsmittel für die Stecksockel (7) aus Federklemmen (13) gebildet sind, die jeweils in Ausnehmungen (14) des Stecksockels (7) verrastet und in Steckrichtung relativ zum Stecksockel (7) in Grenzen frei beweglich sind und durch die Leiterkarte (10) hindurch verlaufen,
**dass** in ein freies Ende der Federklemmen (13) Steckfahnen (15a) des Schaltelementkontaktes (15) einführbar sind und
**dass** die einsetzbaren Befehls- und/oder Anzeigegeräte (6) mittels der Steckfahnen (15a) von der Hinterseite her in den Stecksockeln (7) verrastbar sind.

2. Hängeschalter nach Anspruch 1,
**dadurch gekennzeichnet,**
**daß** die Stecksockel (7) quer zur Längsrichtung (16) der Gehäuseober- bzw. Unterteile (1;2) mittig verlaufende Filmschamiere (7a) bilden, die entsprechend der Wölbung der Leiterkarte (10) biegbar sind.

3. Hängeschalter nach einem der Ansprüche 1 und 2,
**dadurch gekennzeichnet,**
**daß** eine Zugentlastung mittels eines an der Steuerleitung (4) auf der zur Bedienperson zugewandten Seite anliegende Seils (3) vorgesehen ist.

4. Hängeschalter nach einem der Ansprüche 1 bis 3,
**dadurch gekennzeichnet,**
**daß** am Gehäuseunterteil (1) zumindest eine Griffleiste (12) in Längsrichtung (16) zum Halten des Gesamtgehäuses (1,2) vorgesehen ist.

5. Hängeschalter nach einem der Ansprüche 1 bis 4,
**dadurch gekennzeichnet,**
**daß** die Bogenkrümmung des Gesamtgehäuses (1,2) in Abhängigkeit der Anzahl der Betätigungselemente (8) bzw. der Befehls- und/oder Anzeigegeräte (6) in der Art gewählt ist, daß bei wachsender Anzahl der Betätigungselemente (8) bzw. der Befehls- und/oder der Anzeigegeräte (6) eine kleinere Krümmung verwendet wird.

6. Hängeschalter nach einem der Ansprüche 1 bis 5,
**dadurch gekennzeichnet,**
**daß** oberhalb der Reihen von Betätigungselementen (8) eine Multifunktionsanzeige (9) angeordnet ist.

7. Hängeschalter nach einem der Ansprüche 1 bis 6,
**dadurch gekennzeichnet,**
**daß** die Multifunktionsanzeige (9) jeweils aus einem Display (9a) besteht.

8. Hängeschalter nach einem der Ansprüche 1 bis 7,
**dadurch gekennzeichnet,**
**daß** jeweils unterhalb eines Paares von Betätigungselementen (8) und/oder unterhalb des Displays (9a) eine Schrägfläche (11) für eine Beschriftung vorgesehen ist.

9. Hängeschalter nach einem der Ansprüche 1 bis 8,
**dadurch gekennzeichnet,**
**daß** die Befehls- und die Anzeigegeräte (6) sowie die Multifunktionsanzeige (9) auf der Leiterkarte (10) verdrahtet sind.

10. Hängeschalter nach einem der Ansprüche 1 bis 9,
**dadurch gekennzeichnet,**
**daß** die durch das Gehäuseunterteil (1) und das Gehäuseoberteil (2) eingeführte Steuerleitung (4) zentral an einer Steckleiste (5) der Leiterkarte (10) angeschlossen ist.

## Claims

1. Suspended switch, in particular for cranes with contactor control, which is connected to an electrical or electronic control via a control line (4), with two connectable housing parts (1, 2), which receive actuating elements (8) and actuating and/or indicating devices (6), the outer form of the housing being brought closer to the operator in downwardly progressive steps, the actuating elements (8) for the actuating and/or indicating devices (6) arranged on a printed circuit card (10) being provided on the front side (10a) of the said printed circuit card, **characterized in that** the printed circuit card (10), which is adapted to the curved form of the overall housing (1 and 2) and consequently curved in a correspondingly curved form, is arranged in the upper housing part (2) of the overall housing (1 and 2) curved continuously towards the operator, **in that** the actuating and/or indicating devices (6) are arranged on the rear side (10b) of the said printed circuit card, for which purpose insertion sockets (7) into which the actuating and/or indicating devices (6) can be inserted from the back side are provided on the rear side (10b) of the curved printed circuit card (10), **in that** the means of attachment for the insertion sockets (7) are formed by spring clips (13), which in each case are locked in recesses (14) of the insertion socket (7) and are freely movable within limits in the direction of insertion in relation to the insertion socket (7), and run through the printed circuit card (10), **in that** insertion lugs (15a) of the switching element contact (15) can be inserted into a free end of the spring clips (13) and **in that** the insertable actuating and/or indicating devices (6) can be locked in the insertion sockets (7) from the back side by means of the insertion lugs (15a).

2. Suspended switch according to Claim 1, **characterized in that** the insertion sockets (7) form transversely to the longitudinal direction (16) of the upper and lower housing parts (1, 2) centrally running film hinges (7a), which can be bent in a way corresponding to the convexity of the printed circuit card (10).

3. Suspended switch according to either of Claims 1 and 2, **characterized in that** a strain relief is provided by means of the cord (3) lying against the control line (4) on the side facing the operator.

4. Suspended switch according to one of Claims 1 to 3, **characterized in that** at least one gripping bar (12) is provided on the lower housing part (1) in the longitudinal direction (16), for holding the overall housing (1, 2).

5. Suspended switch according to one of Claims 1 to 4, **characterized in that** the curvature of the overall housing (1, 2) is chosen according to the number of actuating elements (8) or actuating and/or indicating devices (6) in such a way that, with an increasing number of actuating elements (8) or actuating and/or indicating devices (6), a smaller curvature is used.

6. Suspended switch according to one of Claims 1 to 5, **characterized in that** a multi-functional indication (9) is arranged above the rows of actuating elements (8).

7. Suspended switch according to one of Claims 1 to 6, **characterized in that** the multi-functional indication (9) respectively comprises a display (9a)

8. Suspended switch according to one of Claims 1 to 7, **characterized in that** a sloping surface (11) for an inscription is respectively provided underneath a pair of actuating elements (8) and/or underneath the display (9a).

9. Suspended switch according to one of Claims 1 to 8, **characterized in that** the actuating and indicating devices (6) and also the multi-functional indication (9) are wired on the printed circuit card (10).

10. Suspended switch according to one of Claims 1 to 9, **characterized in that** the control line (4) leading through the lower housing part (1) and the upper housing part (2) is connected centrally to an edge connector (5) of the printed circuit card (10).

## Revendications

1. Interrupteur suspendu, en particulier pour grues avec commande à contacteurs, qui est relié via une ligne de commande (4) à une commande électrique ou électronique, comportant deux parties de boîtier (1, 2) raccordables qui reçoivent des éléments d'actionnement (8) et des unités de commande et/ou d'affichage (6), la forme extérieure du boîtier s'étendant vers le bas en se rapprochant progressivement de l'opérateur et les éléments d'actionnement (8), destinés aux unités de commande et/ou d'affichage (6) agencées sur une carte de circuits imprimés (10), étant prévus sur la face avant (10a) de ladite forme extérieure de boîtier,
**caractérisé en ce que**
la carte de circuits imprimés (10), s'adaptant à la forme incurvée du boîtier complet (1 et 2) et ayant donc une forme incurvée correspondante, est agencée dans la partie supérieure de boîtier (2) du boîtier complet (1 et 2) incurvé continûment en direction de l'opérateur,
les unités de commande et/ou d'affichage (6) sont agencées au dos (10b) de ladite carte et il est prévu pour cela au dos (10b) de la carte de circuits imprimés (10) incurvée des embases à enfichage (7) dans lesquelles les unités de commande et/ou d'affichage (6) peuvent être enfichées depuis l'arrière,
les moyens de fixation destinés aux embases à enfichage (7) sont constitués de bornes élastiques (13) qui sont encliquetées respectivement dans des évidements (14) de l'embase à enfichage (7) et sont aptes à se déplacer librement et de façon limitée dans la direction d'enfichage par rapport à l'embase à enfichage (7) et s'étendent à travers la carte de circuits imprimés (10),
des pattes enfichables (15a) du contact (15) de l'élément contacteur peuvent être insérées dans une extrémité libre des bornes élastiques (13) et
les unités de commande et/ou d'affichage (6) enfichables sont encliquetées depuis l'arrière dans les embases à enfichage (7) au moyen des pattes enfichables (15a).

2. Interrupteur suspendu selon la revendication 1, **caractérisé en ce que** l'embase à enfichage (7) forme des charnières à film s'étendant au milieu transversalement à la direction longitudinale des parties inférieure et supérieure de boîtier (1 ; 2), lesquelles charnières à film sont flexibles conformément à la cambrure de la carte de circuits imprimés (10).

3. Interrupteur suspendu selon la revendication 1 et 2, **caractérisé en ce qu'**il est prévu une décharge de traction au moyen d'un câble (3) jouxtant la ligne de commande (4) du côté dirigé vers l'opérateur.

4. Interrupteur suspendu selon l'une des revendications 1 à 3, **caractérisé en ce qu'**il est prévu sur la partie inférieure de boîtier (1) au moins une baguette de maintien (12) dans la direction longitudinale (16) en vue de maintenir le boîtier complet (1, 2).

5. Interrupteur suspendu selon l'une des revendications 1 à 4, **caractérisé en ce que** la courbure du boîtier complet (1, 2) est choisie en fonction du nombre d'éléments d'actionnement (8) ou d'unités de commande et/ou d'affichage (6) de sorte que la courbure diminue à mesure que le nombre d'éléments d'actionnement (8) ou d'unités de commande et/ou d'affichage (6) augmente.

6. Interrupteur suspendu selon l'une des revendications 1 à 5, **caractérisé en ce qu'**un affichage multifonctionnel (9) est agencé au-dessus de la rangée d'éléments d'actionnement (8).

7. Interrupteur suspendu selon l'une des revendications 1 à 6, **caractérisé en ce que** l'affichage multifonctionnel (9) se compose d'un afficheur (9a).

8. Interrupteur suspendu selon l'une des revendications 1 à 7, **caractérisé en ce qu'**une surface inclinée (11) destinée à une étiquette est prévue au-dessous d'une paire d'éléments d'actionnement (8) et/ou au-dessous de l'afficheur (9a).

9. Interrupteur suspendu selon l'une des revendications 1 à 8, **caractérisé en ce que** les unités de commande et d'affichage (6) ainsi que l'affichage multifonctionnel (9) sont câblés sur la carte de circuits imprimés (10).

10. Interrupteur suspendu selon l'une des revendications 1 à 9, **caractérisé en ce que** la ligne de commande (4) insérée dans la partie inférieure de boîtier (1) et la partie supérieure de boîtier (2) est raccordée centralement à un connecteur (5) de la carte de circuits imprimés (10).
